# FASCICULE DE BREVET EUROPEEN

(11) **EP 3 554 899 B1**
(45) Date de publication et mention de la délivrance du brevet: **03.03.2021**
(21) Numéro de dépôt: 17816524.7
(22) Date de dépôt: 27.11.2017
(51) Int. Cl.: B60S 1/40

(54) **DISPOSITIF DE CONNEXION POUR LA LIAISON D'UN BALAI D'ESSUYAGE A UN BRAS D'ENTRAINEMENT POUR VEHICULE**
VERBINDUNGSVORRICHTUNG ZUR VERBINDUNG EINES WISCHERBLATTES AN EINEN ANTRIEBSARM FÜR EIN FAHRZEUG
CONNECTION DEVICE FOR LINKING A WIPER BLADE TO A DRIVE ARM FOR A VEHICLE

(30) Priorité: 13.12.2016 FR 1662351
(43) Date de publication de la demande: 23.10.2019
(73) Titulaire: Valeo Systèmes d'Essuyage, 78322 Le Mesnil Saint Denis (FR)
(72) Inventeur: GAUCHER, Vincent, 63500 Issoire (FR); HOUSSAT, Stéphane, 63500 Issoire (FR); JOMARD, Olivier, 63500 Issoire (FR); MOULEYRE, Guillaume, 63500 Issoire (FR)
(74) Mandataire: Valeo Visibility
(86) Numéro de dépôt international: PCT/EP2017/080547
(87) Numéro de publication internationale: WO 2018/108509

(56) Documents cités:
- FR-A- 1 069 875
- FR-A1- 2 767 769
- US-A- 3 922 749
- US-A1- 2016 001 745

## Description

L'invention se rapporte au domaine de l'essuyage et/ou du nettoyage des surfaces vitrées d'un véhicule, notamment automobile, et elle concerne plus particulièrement un dispositif de connexion entre un balai d'essuie-glace et un bras d'entraînement de celui-ci.

Les essuie-glaces pour véhicules automobiles sont conçus pour retirer, par balayage, les liquides et salissures qui peuvent perturber la vision que le conducteur a de son environnement. Ces essuie-glaces comprennent généralement au moins un bras d'entraînement qui effectue un mouvement de va-et-vient angulaire sur une surface vitrée du véhicule, et au moins un balai d'essuyage équipé d'une lame d'essuyage réalisée dans un matériau plastique souple. En frottant contre cette surface vitrée, la lame racle l'eau et un certain nombre de salissures pour les évacuer en dehors du champ de vision du conducteur.

Quelle que soit la configuration du balai d'essuie-glace : étriers articulés qui retiennent la lame d'essuyage en plusieurs zones distinctes, ou vertèbre métallique qui maintient la lame d'essuyage sur toute sa longueur, celui-ci est rattaché au bras d'entraînement du système d'essuyage par un ensemble de connexion qui comprend généralement au moins un connecteur et un adaptateur. Le connecteur est solidaire du balai d'essuie-glace, et l'adaptateur est une pièce configurée, d'une part, pour coopérer avec le connecteur et, d'autre part, pour être engagée avec une partie terminale du bras d'entraînement. Le connecteur et l'adaptateur coopèrent alors pour réaliser la fixation du balai d'essuie-glace sur le bras d'entraînement et autorisent une liaison articulée entre ces deux derniers.

Dans le marché de la vente de pièces et accessoires pour la seconde monte, il est connu de proposer un même balai d'essuie-glace, vendu équipé de son propre connecteur, adaptable pour plusieurs types de bras d'entraînement. Il convient donc de concevoir un adaptateur utilisable avec le plus grand nombre possible de types de partie terminales de bras et avec le plus grand nombre possible de types de connecteurs de balai d'essuie-glaces, puisque c'est l'adaptateur qui forme l'interface entre ces deux éléments. FR -A-1069875 montre le préambule de la revendication 1.

La présente invention a pour but de proposer une solution permettant de réaliser la connexion d'un balai d'essuyage à un type particulier de partie terminale de bras d'entraînement pour un système d'essuyage d'un véhicule automobile, partie terminale qui présente, perpendiculairement à sa direction longitudinale d'extension, une section en forme de "U" renversé dont les branches verticales sont constituées par deux parois latérales de cette partie terminale et dont la branche transversale est formée par une paroi supérieure de ladite partie terminale. Paroi supérieure et parois latérales de cette partie terminale délimitent ainsi entre elles un volume d'accueil pour l'adaptateur selon l'invention.

La partie terminale particulière à laquelle l'invention s'applique plus précisément comporte également deux ouvertures agencées chacune longitudinalement sur l'une des parois latérales de la partie terminale à partir d'un bord d'extrémité libre de cette paroi latérale.

L'invention a pour but de proposer un adaptateur qui permette de réaliser une utilisation efficace de ces ouvertures pour assurer la liaison du balai d'essuie-glace avec le bras d'entraînement.

Pour atteindre le but qu'elle s'est fixé, l'invention propose un dispositif de connexion, selon la revendication 1, destiné à relier un balai d'essuyage à un bras d'entraînement d'un système d'essuyage pour véhicule, comprenant :
- un adaptateur formé au moins par une paroi supérieure à partir de laquelle sont issus au moins deux flancs latéraux, dont un premier flanc latéral et un deuxième flanc latéral, de sorte à délimiter un volume interne dans lequel un connecteur solidaire du balai d'essuyage est destiné à s'étendre, le premier flanc latéral et le deuxième flanc latéral comprennent chacun un orifice aligné l'un avec l'autre,
- un organe de fixation comprenant des extrémités, l'organe de fixation traversant au moins les deux orifices de l'adaptateur, dans lequel au moins une des extrémités, dite première extrémité, de l'organe de fixation dépasse du premier flanc latéral de l'adaptateur et en ce qu'au moins une portion de cette première extrémité est en appui contre le premier flanc latéral de l'adaptateur.

Ainsi, l'organe de fixation passant à travers les orifices permet un blocage de l'adaptateur et du bras d'entraînement selon une direction verticale et la présence de la portion en appui contre le flanc de l'adaptateur permet un blocage selon une direction transversale.

Selon différentes caractéristiques de l'invention prises seules ou en combinaison, on pourra prévoir que :
- la portion de la première extrémité est en appui contre une face externe du premier flanc latéral.
- selon l'invention, au moins un bord périphérique de la portion de la première extrémité est configuré pour venir en appui contre une partie terminale d'un bras d'entraînement. Ainsi, l'organe de fixation participe à un blocage entre l'adaptateur et le bras d'entraînement. La surface d'appui formée par le bord périphérique de la portion permet de bloquer mécaniquement l'adaptateur sur le bras d'entraînement, notamment selon un axe vertical, et permet donc de relier un balai d'essuyage au bras d'entraînement. Plus précisément, le bord périphérique de la portion est configuré pour venir en appui contre une tranche délimitant une ouverture présente sur un pan latéral de la partie terminale du bras d'entraînement.
- l'organe de fixation comprend une deuxième extrémité opposée à la première extrémité et entre lesquelles un cylindre s'étend.
- la portion de la première extrémité comprend une première embase délimitant un premier épaulement par rapport au cylindre.
- le cylindre est configuré pour former un pivot pour le connecteur du balai d'essuyage. Un tel organe de fixation cylindrique permet de solidariser ensemble un connecteur de balai d'essuyage et un bras d'entraînement via l'adaptateur tout en autorisant des mouvements en rotation du connecteur par rapport à l'adaptateur et au bras d'entraînement, notamment du fait de ce pivot.
- la deuxième extrémité de l'organe de fixation dépasse du deuxième flanc latéral de l'adaptateur.
- la deuxième extrémité comprend une portion, dite deuxième portion, en appui contre le deuxième flanc latéral de l'adaptateur. Plus particulièrement, la deuxième portion est en appui contre la face externe du deuxième flanc latéral.
- la deuxième portion comprend au moins une deuxième embase délimitant au moins un deuxième épaulement par rapport au cylindre. Cette deuxième embase présente une section plus petite que l'embase située à la première extrémité, de manière à pouvoir être insérée dans les orifices des flancs de l'adaptateur.
- la deuxième embase est configurée pour venir en appui contre une partie terminale d'un bras d'entraînement.
- la deuxième embase comprend au moins un méplat configuré pour venir en appui contre la partie terminale du bras d'entraînement. Plus précisément, la deuxième embase est configurée pour venir en appui contre une tranche délimitant une ouverture présente sur un pan latéral de la partie terminale du bras d'entraînement.
- la deuxième extrémité de l'organe de fixation est élastiquement déformable. Une telle extrémité élastiquement déformable permet à l'organe de fixation de s'insérer dans un orifice par cette deuxième extrémité puis une fois l'orifice passé, de reprendre sa forme initiale par extension. Cette extension permet alors un blocage transversal de l'organe de fixation. Ainsi, l'organe de fixation est maintenu d'une part par l'épaulement de la première extrémité et d'autre part par la deuxième extrémité élastiquement déformable.
- la deuxième extrémité élastiquement déformable comprend une fente. Une telle fente autorise un rapprochement des deux branches de la fente dans une direction perpendiculaire à un plan longitudinal d'extension de celle-ci, puis autorise un retour des branches vers leur position initiale lorsque l'espace alentour est suffisamment grand, c'est-à-dire quand le flanc latéral de l'adaptateur est franchi.
- la fente occupe au moins un tiers de l'organe de fixation en s'étendant depuis la deuxième extrémité de l'organe de fixation. La deuxième extrémité se retrouve alors diviser en deux branches présentant chacune une base.
- l'organe de fixation est une pièce distincte de l'adaptateur. On entend par là que l'organe de fixation est une pièce rapportée. Il est également distinct du connecteur et du bras d'entraînement. Distinct signifie que l'organe de fixation peut être séparé de l'adaptateur sans que ces deux composants ne subissent de détérioration rendant inutilisable l'un ou l'autre de ces composants.
- l'adaptateur comprend un dispositif de blocage configuré pour bloquer des mouvements en translation de l'adaptateur sur le bras d'entraînement.
- le dispositif de blocage est un doigt disposé sur la paroi supérieure de l'adaptateur, le doigt étant configuré pour s'insérer dans une fenêtre ménagée sur une partie terminale d'un bras d'entraînement. Plus précisément le doigt permet de bloquer l'adaptateur et la partie terminale du bras d'entraînement suivant une direction longitudinale et une direction transversale.
- le doigt est situé à une extrémité longitudinale de l'adaptateur.
- l'adaptateur comprend un changement de section ménagé à l'intersection d'une tête et d'un corps de l'adaptateur, la tête et le corps s'étendant dans le prolongement l'un de l'autre selon une direction longitudinale de l'adaptateur.
- la tête de l'adaptateur présente des dimensions externes, telles que la hauteur et la largeur, plus grandes que des dimensions externes du corps de l'adaptateur.
- les orifices de l'adaptateur sont situés dans le corps de l'adaptateur.
- une paroi formant le changement de section s'étend dans un plan oblique par rapport à un plan dans lequel s'étend une paroi supérieure du corps.
- la paroi oblique du changement de section est située au niveau de la paroi supérieure du corps de l'adaptateur. Plus précisément, cette paroi oblique peut s'étendre à l'aplomb de la paroi supérieure.

L'invention a également pour objet un ensemble de connexion d'un balai d'essuie-glace à un bras d'entraînement d'un système d'essuyage pour véhicule, comprenant :
- un dispositif de connexion tel que défini précédemment, et
- un connecteur destiné à être solidarisé à un balai d'essuyage, le connecteur étant disposé dans le volume interne de l'adaptateur,
   caractérisé en ce que le connecteur comprend un trou aligné avec les orifices de l'adaptateur, et en ce que l'organe de fixation s'étend dans le trou du connecteur et les orifices de l'adaptateur. Ainsi, l'organe de fixation passant à travers les orifices permet un blocage de l'adaptateur et du connecteur selon une direction verticale et la présence de la portion en appui contre le flanc latéral de l'adaptateur permet un blocage selon une direction transversale. Ainsi, le dispositif de connexion permet de relier le connecteur à l'adaptateur via l'organe de fixation. On assure alors en une seule opération la liaison mécanique entre le connecteur, l'adaptateur et la partie terminale du balai d'essuyage.

L'invention a également pour objet un système d'essuyage pour véhicule comprenant :
- un ensemble de connexion tel que défini précédemment,
- un bras d'entraînement comprenant une partie terminale coopérant avec l'ensemble de connexion, la partie terminale ayant une section en « U » définissant un pan supérieur à partir duquel s'étendent des pans latéraux, au moins un des pans latéraux comprenant une ouverture.

Selon différentes caractéristiques de l'invention prises seules ou en combinaison, on pourra prévoir que :
- un bord périphérique de la portion de l'organe de fixation est en contact avec une tranche définissant l'ouverture situées dans au moins un des pans latéraux.
- l'ouverture d'au moins un des pans latéraux débouche sur un bord d'extrémité dudit pan latéral.
- la portion de l'organe de fixation présente une forme complémentaire de l'ouverture. À cet effet, la portion de l'organe de fixation peut présenter une forme oblongue afin de coopérer avec une ouverture oblongue.
- le pan supérieur du bras d'entraînement comprend une fenêtre dans laquelle s'étend le doigt de l'adaptateur.

L'invention a également pour objet un procédé de montage d'un ensemble de connexion sur un bras d'entraînement d'un système d'essuyage de véhicule tel que défini précédemment, caractérisé en ce qu'il comprend successivement :
- une étape de positionnement de l'adaptateur dans la partie terminale du bras d'entraînement, et
- une étape d'insertion de l'organe de fixation dans une lumière formée par l'alignement des orifices de l'adaptateur avec la ou les ouverture(s) de la partie terminale du bras d'entraînement.

Selon différentes mises en œuvre du procédé prises seules ou en combinaison, on pourra prévoir que :
- l'étape de positionnement est suivie d'une étape de rotation de l'adaptateur par rapport au bras d'entraînement.
- l'étape de positionnement comprend la mise en butée d'une paroi oblique d'un changement de section de l'adaptateur sur un bord d'extrémité libre du pan supérieur de la partie terminale du bras d'entraînement.
- en fin de l'étape de rotation, celle-ci comprend une insertion d'un doigt de l'adaptateur dans une fenêtre ménagée sur le pan supérieur de la partie terminale du bras d'entraînement.
- le procédé comprend une étape de translation longitudinale de l'adaptateur sur le bras d'entraînement après l'étape de rotation.
- le procédé comprend une étape de mise en place d'un connecteur dans le volume interne de l'adaptateur.
- la lumière formée par l'alignement des orifices de l'adaptateur avec la ou les ouverture(s) de la partie terminale du bras d'entraînement comprend aussi un trou du connecteur.
- l'étape d'insertion de l'organe de fixation comprend une mise en butée de l'organe d'insertion sur un des flancs latéraux de l'adaptateur. Avantageusement, sur une face externe du flanc latéral.

D'autres caractéristiques et avantages de la présente invention apparaitront plus clairement à l'aide de la description qui suit et des dessins parmi lesquels :
- la figure 1 est une vue en perspective d'un bras d'entraînement assemblé avec un balai d'essuyage formant un système d'essuyage pour un véhicule automobile,
- la figure 2 est une vue en perspective d'une partie terminale du bras d'entraînement avec laquelle un dispositif de connexion selon l'invention est destiné à coopérer,
- la figure 3 est une vue en perspective d'un adaptateur selon l'invention,
- la figure 4 est une vue en perspective d'un organe de fixation selon l'invention,
- les figures 5A et 5B sont des vues en perspective d'un ensemble de connexion selon l'invention monté sur le bras d'entraînement, respectivement vu d'un premier côté puis vu d'un deuxième côté,
- la figure 6A est une vue en coupe illustrant des étapes d'un procédé de montage selon l'invention, dans laquelle un adaptateur est positionné par rapport à la partie terminale du bras d'entraînement,
- la figure 6B est une vue en coupe illustrant une étape additionnelle du procédé de montage selon l'invention, et
- la figure 6C est une vue en perspective illustrant une étape finale du procédé de montage selon l'invention montrant l'insertion de l'organe de fixation dans une lumière formée par l'alignement des orifices de l'adaptateur, du trou du connecteur et d'une ouverture du bras d'entraînement.

Il est tout d'abord à noter que si les figures exposent l'invention de manière détaillée pour sa mise en œuvre, elles peuvent bien entendu servir à mieux la définir le cas échéant. Il est également à noter que, sur l'ensemble des figures, les éléments similaires sont indiqués par la même référence. Pour des raisons de lisibilité des figures, le balai d'essuyage n'a pas toujours été représenté.

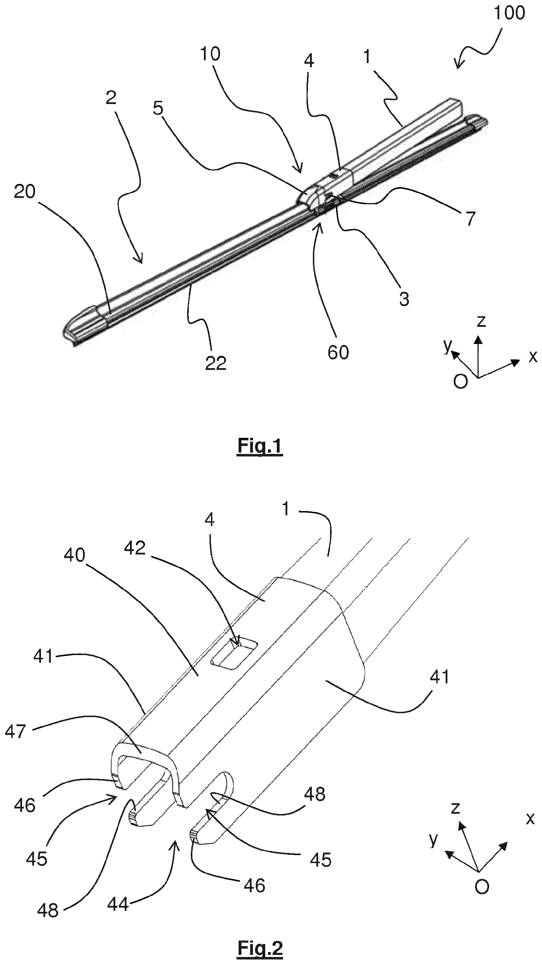

Sur les figures, les dénominations longitudinale, transversale, verticale, latérale, avant, arrière, gauche, droite, supérieure, inférieure, se réfèrent à l'orientation d'un balai d'essuyage 2 illustré sur la figure 1. Une direction longitudinale correspond à un axe longitudinal Ox selon lequel s'étend le balai d'essuyage 2 et/ou selon lequel s'étend un dispositif de connexion 10 de la présente invention. Une direction transversale correspond à celle d'un axe transversal Oy qui est perpendiculaire à l'axe longitudinal Ox. Les dénominations gauche et droite s'apprécient par rapport à une position le long de l'axe transversal Oy, de part et d'autre de l'axe longitudinal Ox. Une direction verticale, parallèle à celle d'un axe vertical Oz, est perpendiculaire aux directions longitudinale et transversale susvisées. Les dénominations supérieure ou inférieure se rapportent à des orientations parallèles à l'axe vertical Oz, la dénomination inférieure contenant le plan du pare-brise. Pour les directions longitudinales, les dénominations extérieure ou intérieure s'apprécient par rapport à un point de pivotement du balai d'essuyage 2 sur un bras d'entraînement 1 du balai d'essuyage 2, la dénomination intérieure correspondant à la partie où le bras d'entraînement 1 et un demi-balai s'étendent, la dénomination extérieure correspondant à la partie où l'autre demi-balai s'étend.

Les directions évoquées ci-dessus sont illustrées dans un repère orthonormé Oxyz représenté sur les figures. Dans ce repère, l'axe Ox représente la direction longitudinale, l'axe Oy représente la direction transversale, et l'axe Oz représente la direction verticale.

La figure 1 illustre un système d'essuyage 100 pour véhicule automobile. Ce système d'essuyage 100 comprend un bras d'entraînement 1 qui effectue un mouvement de va-et-vient angulaire contre une surface à essuyer coopérant avec un balai d'essuyage 2. Le balai d'essuyage 2 comprend ici au moins une vertèbre 20 porteuse d'une lame d'essuyage 22 réalisée dans un matériau souple. Dans le mouvement de va-et-vient angulaire du bras d'entraînement 1, le balai d'essuyage 2 et sa lame d'essuyage 22 sont entraînés dans un mouvement angulaire contre la surface vitrée pour réaliser l'opération d'essuyage/nettoyage désirée. Le balai d'essuyage 2 est rattaché au bras d'entraînement 1 par un ensemble de connexion 60 qui comprend un connecteur 3 et un dispositif de connexion 10. Le connecteur 3 est solidarisé au balai d'essuyage 2, et le dispositif de connexion 10 réalise une interface entre ce connecteur 3 et une partie terminale 4 du bras d'entraînement 1. Connecteur 3 et dispositif de connexion 10 coopèrent ensemble pour réaliser la liaison du balai d'essuie-glace 2 sur le bras d'entraînement 1 tout en autorisant une articulation entre ces deux éléments.

Plus précisément, l'invention a pour objet le dispositif de connexion 10 qui comprend un adaptateur 5 et un organe de fixation 7. Cet adaptateur 5 et cet organe de fixation 7 coopèrent ensemble pour relier le connecteur 3 du balai d'essuyage 2 à un type particulier de partie terminale 4 du bras d'entraînement 1, notamment dans le but de fournir des pièces détachées pour des systèmes d'essuyage 100 dont le bras d'entraînement 1 présente ce type particulier de partie terminale 4.

La partie terminale 4, représentée schématiquement sur la figure 2, avec laquelle l'adaptateur 5 selon l'invention est destiné à coopérer, comporte un pan supérieur 40 à partir duquel s'étendent, sensiblement perpendiculairement, deux pans latéraux 41. Il est à noter que par le terme « pan » il est entendu paroi supérieure ou paroi(s) latérale(s) de la partie terminale 4. La partie terminale 4 présente ainsi au moins une section transversale dont la forme est sensiblement celle d'un "U" renversé dont la base est formée par le pan supérieur 40 et dont les branches sont formées par les pans latéraux 41. Pan supérieur 40 et pans latéraux 41 de cette partie terminale 4 délimitent ensemble un volume d'accueil 44.

L'un au moins des pans latéraux 41 comporte une ouverture 45. Avantageusement, une ouverture 45 est agencée dans chacun des pans latéraux 41 de la partie terminale 4. La partie terminale 4 comprend ici deux ouvertures 45. L'ouverture 45 peut par exemple prendre la forme d'un trou oblong s'étendant sensiblement dans la longueur du pan latéral 41, en direction d'une partie allongée du bras d'entraînement 1. L'ouverture 45 s'étend à partir d'un bord d'extrémité libre 46 du pan latéral 41 correspondant et débouche sur celui-ci, comme cela est illustré sur la figure 2. Autrement dit, le bord d'extrémité libre 46 du pan latéral 41 n'est pas rectiligne. Il est à noter que chaque ouverture 45 est délimitée par une tranche 48 du pan latéral 41.

La partie terminale 4 comprend également une fenêtre 42 ménagée sur le pan supérieur 40. Cette fenêtre 42 est située à équidistance des pans latéraux 41 et se positionne plus près du bras d'entraînement 1 que d'un bord d'extrémité libre 47 du pan supérieur 40. La fenêtre 42 est, par exemple, rectangulaire ou carré.

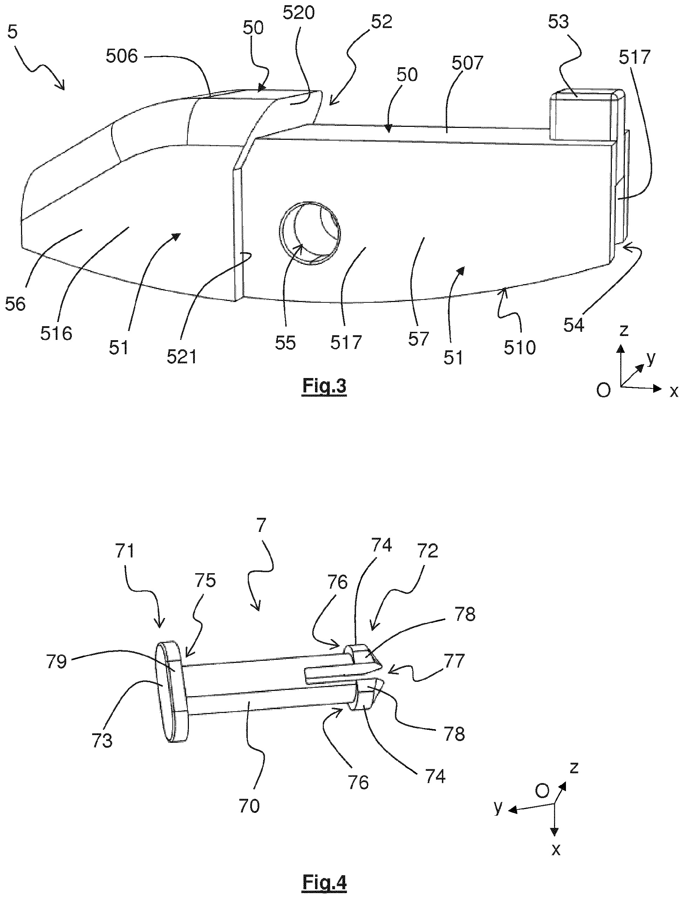

La figure 3 montre que l'adaptateur 5 selon l'invention est formé au moins par une paroi supérieure 50 à partir de laquelle sont issus au moins deux flancs latéraux 51, dont un premier flanc latéral et un deuxième flanc latéral, de sorte à délimiter un volume interne 54 dans lequel le connecteur 3 est destiné à s'étendre. L'adaptateur 5 comprend également deux orifices 55 ménagés chacun dans l'un des flancs latéraux 51, les orifices 55 étant alignés sur une même droite. Par alignés sur une même droite, on entend que cette droite est parallèle à la direction Oy et passe par les centres des deux orifices 55. Les orifices 55 sont de préférence circulaires.

Les orifices 55 sont configurés pour être alignés avec au moins une partie des ouvertures 45 ménagées sur la partie terminale 4. Il est à noter que les flancs latéraux 51 présentent des bords inférieurs libres 510 ayant une forme courbe, afin d'autoriser des mouvements en rotation du connecteur 3 le long de ces bords de forme courbe 510.

Par ailleurs, l'adaptateur 5 comprend un épaulement, aussi appelé changement de section 52, permettant de délimiter une tête 56 et un corps 57 qui s'étendent longitudinalement dans le prolongement l'un de l'autre selon l'axe (Ox) précédemment défini. En référence aux directions et orientations précédemment définies, la tête 56 s'étend vers l'extérieur, et le corps 57 s'étend vers l'intérieur. Selon un mode de réalisation de l'invention, l'adaptateur 5 est réalisé par injection d'un matériau polymère dans un moule, et il est issu de matière en un seul bloc. Il est à noter que les orifices 55 sont ménagés, de préférence, dans le corps 57 de l'adaptateur 5.

La présence du changement de section 52 implique une différence de dimensions externes entre la tête 56 et le corps 57. La tête 56 présente une section transversale ayant des dimensions plus grandes que les dimensions d'une section transversale du corps 57. Les dimensions sont par exemple un périmètre externe ou une surface. Selon un mode de réalisation de l'invention, les dimensions verticale et transversale de ce changement de section 52 sont sensiblement égales respectivement à l'épaisseur du pan supérieur 40 de la partie terminale 4 du bras d'entraînement 1 et à l'épaisseur des pans latéraux 41 de cette même partie terminale 4 avec laquelle l'adaptateur 5 selon l'invention est destiné à coopérer, de telle manière que le bord d'extrémité libre 47 du pan supérieur 40, tel que visible sur la figure 2, puisse venir en appui contre le changement de section 52. De telles caractéristiques permettent d'obtenir une tête 56 qui affleure les faces extérieures de la partie terminale 4 du bras d'entraînement 1. On comprend alors que seul le corps 57 de l'adaptateur 5 est destiné à être recouvert par la partie terminale 4.

Tel que visible sur la figure 3, la tête 56 est formée d'une paroi supérieure 506, de deux flancs latéraux 516 sensiblement verticaux s'étendant chacun à partir d'un côté longitudinal de la paroi supérieure 506, et sensiblement perpendiculairement à cette dernière.

On peut aussi définir que le corps 57 comprend une paroi supérieure 507, deux flancs latéraux 517 sensiblement verticaux qui s'étendent chacun à partir d'un côté longitudinal de la paroi supérieure 507, sensiblement perpendiculairement à celle-ci. Plus précisément, les flancs latéraux 517 présentent chacun des faces externes contre au moins une desquelles un organe de fixation 7 est configuré pour prendre appui. Les flancs latéraux 517 comprennent également des faces internes qui délimitent le volume interne 54. Selon le mode de réalisation illustré par les figures, la dimension longitudinale du corps 57 est supérieure à la dimension transversale de celui-ci.

Tête 56 et corps 57 présentent donc chacun, selon un plan de section transversal parallèle au plan (Oyz) du repère précédemment défini, une section droite en forme de "U" renversé dont la base transversale est constituée des parois supérieures, respectivement 506 et 507, et dont les branches verticales sont formées par les flancs latéraux, respectivement 516,517.

Des parois verticales 521 formant le changement de section 52 s'étendent de manière sensiblement parallèle au plan transversal vertical (Oyz) du repère orthonormé précédemment défini, alors qu'une paroi transversale 520 formant le changement de section 52 au niveau de la paroi supérieure 50 s'étend de manière oblique par rapport au plan transversal vertical (Oyz). Autrement dit, la paroi transversale 520 s'étend de manière oblique, c'est-à-dire ni de manière perpendiculaire, ni de manière parallèle, par rapport à la paroi supérieure 507 du corps 57 de l'adaptateur 5.

Par ailleurs, la paroi supérieure 50 de l'adaptateur 5 comprend un dispositif de blocage configuré pour bloquer des mouvements en translation de l'adaptateur 5 sur le bras d'entraînement 1. Ce dispositif de blocage est destiné à s'insérer dans la fenêtre 42 prévue sur la partie terminale 4 du bras d'entraînement 1 précédemment décrite. À cet effet, le dispositif de blocage peut être un doigt 53 présentant une forme sensiblement complémentaire à la fenêtre 42 et pouvant présenter un jeu volontairement prévu avec la fenêtre 42. Le doigt 53 est ici porté par le corps 57 de l'adaptateur 5, notamment en émergeant de la paroi supérieure 507 du corps 57. Un tel doigt 53 est disposé à une extrémité longitudinale du corps 57 qui est opposée à la tête 56, par rapport au corps 57.

Selon l'invention, le dispositif de connexion 10 comprend aussi un organe de fixation 7, tel que l'exemple de réalisation illustré sur la figure 4. L'organe de fixation 7 est une pièce rapportée et est destiné à traverser au moins un, et avantageusement les deux orifices 55 de l'adaptateur 5. L'organe de fixation 7 comprend alors des extrémités, dont une première extrémité 71 et une deuxième extrémité 72, entre lesquelles un cylindre 70 s'étend. Ces extrémités 71, 72 représentent les bouts longitudinaux de l'organe de fixation 7.

La première extrémité 71 comprend une première portion, qui peut prendre la forme d'une embase 73 délimitant un premier épaulement 75, par rapport au cylindre 70. L'embase 73 présente un bord périphérique 79 qui entoure l'embase 73, c'est-à-dire suivant le périmètre externe de l'embase 73. Cette embase 73 peut présenter une forme sensiblement complémentaire à l'ouverture 45 de la partie terminale 4 du bras d'entraînement 1, telle que visible sur la figure 2. Dans le cas d'espèce, l'embase 73 présente une forme oblongue. L'embase 73 présente des dimensions lui interdisant de s'insérer dans les orifices 55 de l'adaptateur 5. Autrement dit, l'embase 73 présente une section plus grande que la section de l'orifice 55 de l'adaptateur 5 autour duquel elle est destinée à prendre appui.

La deuxième extrémité 72 de l'organe de fixation 7 est, de préférence, élastiquement déformable. Une telle extrémité élastiquement déformable permet à l'organe de fixation 7 de s'insérer et coulisser dans les orifices 55 de l'adaptateur 5 par cette deuxième extrémité 72, puis une fois les orifices 55 passés, de reprendre sa forme initiale par extension. Cette extension permet alors un blocage en position de l'organe de fixation 5.

À cet effet, la deuxième extrémité 72 élastiquement déformable peut comprendre une fente 77 s'étendant dans la longueur de l'organe de fixation 7. Une telle fente 77 autorise une déformation dans une direction perpendiculaire à un plan longitudinal de la fente 77, puis autorise un retour vers sa forme initiale, lorsque l'espace alentour le lui permet, c'est-à-dire lorsque le flanc latéral 517 du corps 57 est franchi. Bien entendu, tout autre moyen permettant de rendre la deuxième extrémité 72 élastiquement déformable est couvert par l'invention. L'espace réservé par la fente 77 détermine l'élasticité de la deuxième extrémité 72. Ici, la fente 77 occupe un tiers de la longueur de l'organe de fixation 7. Alternativement ou en combinaison la fente 77 occupe aussi un tiers de la largeur de l'organe de fixation 7. La longueur est mesurée le long de l'axe longitudinal de l'organe de fixation 7 et la largeur est mesurée le long d'une droite perpendiculaire au plan longitudinal de la fente 77.

La fente 77 s'étend depuis la deuxième extrémité 72 de l'organe de fixation vers la première extrémité 71. La fente 77 divise alors la deuxième extrémité 72 en deux branches. On note alors que, dans l'exemple de réalisation, la deuxième extrémité 72 comporte deux portions, dites aussi bases 74, délimitant chacune des épaulements 76. Ces épaulements 76 présentent, de préférence, les mêmes dimensions entre eux. Bien entendu, les épaulements 76 de la deuxième extrémité 72 et la fente 77 présentent des dimensions autorisant l'insertion de l'organe de fixation 7 dans les orifices 55 de l'adaptateur 5. Il est à noter que les bases 74 présentent chacune des bords périphériques, ces bords périphériques pouvant comprendre des méplats 78 destinés à venir au contact des tranches 48 définissant les ouvertures 45 de la partie terminale 4, telles qu'illustrées sur la figure 2.

La longueur de l'organe de fixation 7 est telle qu'au moins une des extrémités 71, 72 de l'organe de fixation 7 est configurée pour dépasser d'un des flancs latéraux 51 de l'adaptateur, plus précisément, d'un des flancs 517 du corps 57 de l'adaptateur 5 lorsque l'organe de fixation 7 est inséré dans les orifices 55 de l'adaptateur 5. En d'autres termes, la dimension, selon l'axe (Oy) précédemment défini, de l'organe de fixation 7 est avantageusement supérieure à une largeur de l'adaptateur 5, mesurée selon ce même axe (Oy). Au moins une portion de cette extrémité 71, 72, dépassant du flanc latéral 51, 517, est au moins en partie en appui contre le flanc latéral 51, 517 de l'adaptateur 5 ou du corps 507 de l'adaptateur 5. La portion est par exemple formée par l'embase 73 et/ou par les bases 74. Un tel appui est réalisé dans un plan (Oxz) le long de la surface externe du flanc latéral 21.

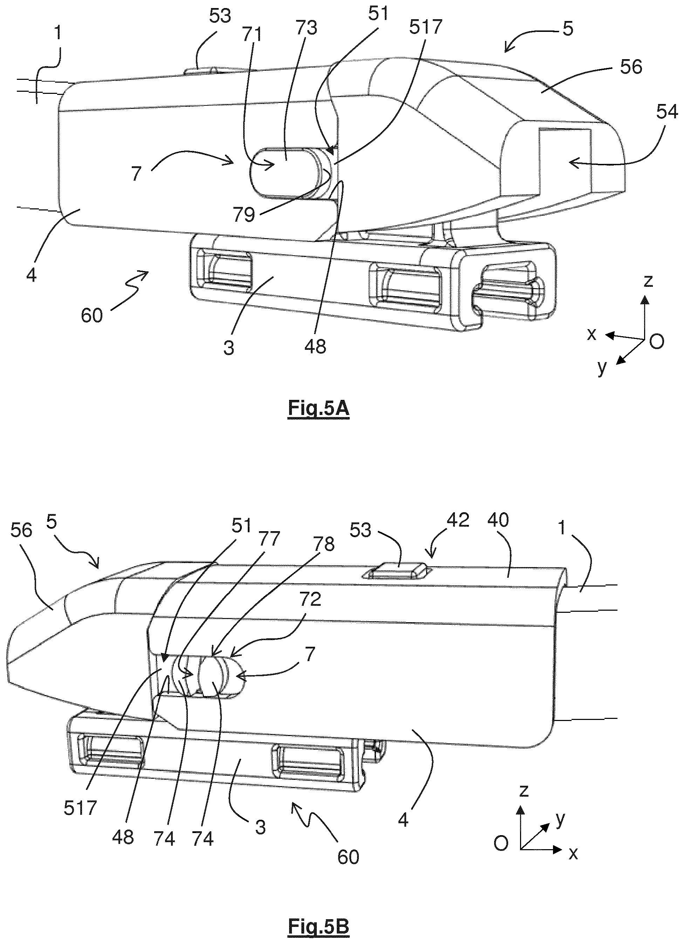

En effet, comme cela est visible sur les figures 5A et 5B montrant l'ensemble de connexion 60 monté sur le bras d'entraînement 1 d'un côté puis de l'autre, les deux extrémités 71, 72 de l'organe de fixation 7 dépassent de part et d'autre des flancs latéraux 51, 517 de l'adaptateur 5 et une face de l'embase 73 et des bases 74 de l'organe de fixation 7 sont en appui contre une face externe des flancs latéraux 51, 517 de l'adaptateur 5. Plus précisément, les faces définissant les épaulements 75, 76 de l'embase 73 et des bases 74 sont en appui contre la face externe des flancs latéraux 51, 517. Ainsi, l'organe de fixation 7 est maintenu, selon l'axe (Oy), d'une part par la première embase 73 et d'autre part par les épaulements 76 de l'extrémité élastiquement déformable.

Par ailleurs, dans l'assemblage du dispositif de connexion 10 selon l'invention avec une partie terminale 4 du type précédemment décrit et illustré par la figure 2, l'organe de fixation 7 vient se placer en appui contre la tranche 48 de l'ouverture 45 agencée sur le pan latéral 41 correspondant de la partie terminale 4. Plus précisément, au moins un bord périphérique 79 de l'embase 73 et/ou des bases 74 forme une surface d'appui contre la tranche 48 délimitant les ouvertures 45 présentes dans la partie terminale 4 du bras d'entraînement 1. Les surfaces d'appui formées permettent alors de maintenir le bras d'entraînement 1 en position par rapport à l'adaptateur 5, notamment selon une direction verticale (Oz). Bien entendu, en fonction des dimensions et de la configuration exacte de cette ouverture 45, et en particulier, en fonction de la dimension de cette ouverture 45 vue selon l'axe (Oz), la forme des bords périphérique de l'embase 73 et/ou des bases 74 de l'organe de fixation 7 peut être adaptée à toute autre forme d'ouverture 45.

On notera que l'embase 73 s'étend au minimum dans l'épaisseur du pan latéral 41. De manière similaire, les bases 74 s'étendent au minimum dans l'épaisseur du pan latéral 41.

Une fois l'organe de fixation 7 en appui contre la tranche 48 de l'ouverture 45, tout mouvement relatif selon l'axe (Oz), de l'adaptateur 5 par rapport à la partie terminale 4, est interdit : l'invention permet ainsi d'assurer un blocage de l'adaptateur 5 par rapport au bras d'entrainement 1. On notera que quelles que soient la configuration et les dimensions exactes de l'ouverture 45, au moins une portion de l'extrémité de l'organe de fixation 7 est en contact simultanément avec le bord 48 haut et/ou bas de l'ouverture 45.

Ainsi, l'organe de fixation 7 passant à travers les ouvertures 45 du bras d'entrainement 1, les orifices 55 de l'adaptateur 5 et avantageusement un trou du connecteur 3 permet d'assurer la liaison du balai d'essuyage 22 au bras d'entraînement 1, tout en autorisant des mouvements en rotation du balai d'essuyage 2 par rapport à l'adaptateur 5 et au bras d'entraînement 1. En effet, l'organe de fixation 7 est aussi destiné à passer dans un trou prévu dans le connecteur 3 du balai d'essuyage 2. Pour rappel, ce connecteur 3 est, ici, positionné dans le volume interne 54 de l'adaptateur 5. L'organe de fixation 7 permet alors de maintenir le connecteur 3 solidaire de l'adaptateur 5, selon toutes les directions verticales, longitudinales et transversales. Le cylindre 70 de l'organe de fixation 7 forme alors un pivot pour le connecteur 3, autorisant alors des mouvements en rotation autour de l'organe de fixation 7.

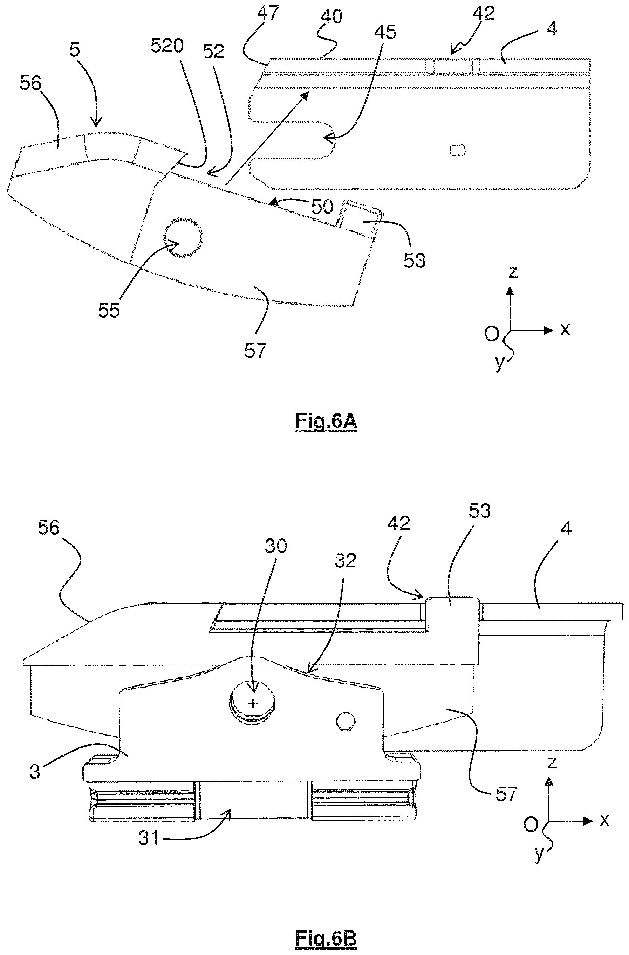

Les figures 6A à 6C illustrent des étapes successives d'un procédé de montage du dispositif de connexion 10 selon l'invention avec une partie terminale 4 du type décrit précédemment et illustré par la figure 2 et éventuellement avec un connecteur 3 d'un balai d'essuyage.

La figure 6A illustre en coupe une première étape de montage correspondant à une étape de positionnement de l'adaptateur 5 dans la partie terminale 4 du bras d'entraînement 1. En effet, pour faire rentrer l'adaptateur 5 dans le volume d'accueil 44 de la partie terminale 4, la paroi transversale 520 de l'adaptateur 5 formant le changement de section 52, au niveau de la paroi supérieure 50, est positionnée en butée contre le bord d'extrémité libre 47 du pan supérieur 40 de la partie terminale 4. Pour cela, l'adaptateur 5 est inséré par le dessous de la partie terminale 4.

Une fois la paroi transversale 520 mise en butée sur le bord d'extrémité 47 du pan supérieur 40, le procédé de montage comprend une étape de rotation de l'adaptateur 5 par rapport au bras d'entraînement 1, vers la partie terminale 4. Plus précisément, cette étape de rotation comprend une mise en contact de la paroi supérieure 50 de l'adaptateur 5 avec une face interne du pan supérieur 40 de la partie terminale 4. Autrement dit, le corps 57 de l'adaptateur 5 vient au contact de la face interne du pan supérieur 40. Le doigt 53 de l'adaptateur 5 est alors inséré dans la fenêtre 42 ménagée dans le pan supérieur 40 de la partie terminale 4. Les dimensions extérieures, notamment, du corps 57 de l'adaptateur 5, sont avantageusement définies pour permettre ce guidage et cette insertion. En d'autres termes, les dimensions extérieures du corps 57 de l'adaptateur 5 selon l'invention sont avantageusement inférieures aux dimensions intérieures du volume d'accueil 44 défini précédemment dans la partie terminale 4, pour permettre une insertion aisée mais ajustée, c'est-à-dire sans jeu excessif.

Après cette étape de rotation, le procédé de montage peut comprendre une étape de translation longitudinale de l'adaptateur 5 le long de la partie terminale 4 vers le bras d'entraînement. Cette étape permet de réduire un jeu longitudinal entre la paroi transversale 520 et le bord d'extrémité 47 du pan supérieur 40.

Comme cela est montré sur la figure 6B, le connecteur 3 peut être mis en place dans le volume interne 54 de l'adaptateur 5. Pour cela, le connecteur 3, de préférence, solidaire du balai d'essuyage 2, est mis en place par translation d'axe (Oz) dans le volume interne 54 de l'adaptateur 5.

On peut alors noter que le connecteur 3 comprend une première partie 31 de solidarisation au balai d'essuyage 2 et une deuxième partie 32 configurée pour coopérer avec le dispositif de connexion 10. Cette deuxième partie 32 comprend un trou 30 destiné à être traversé par l'organe de fixation 7.

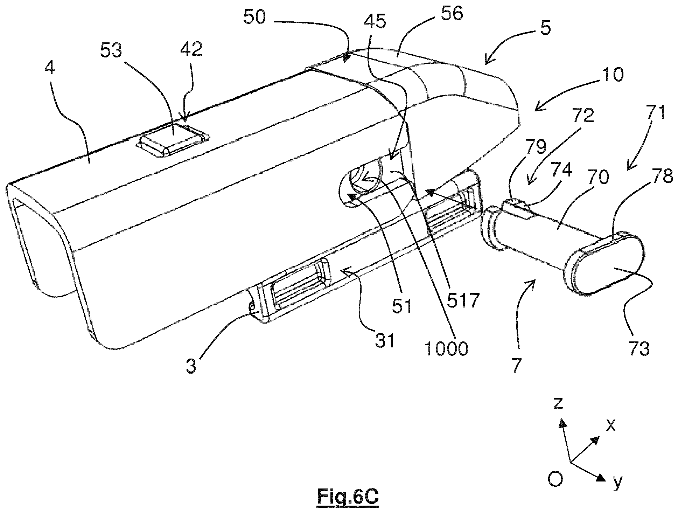

Comme cela est illustré par la figure 6C, le procédé se termine par une étape d'insertion de l'organe de fixation 7 dans une lumière 1000 formée par l'alignement des orifices 55 de l'adaptateur 5 avec les ouvertures 45 de la partie terminale 4 du bras d'entraînement 1 et avantageusement avec le trou 30 du connecteur 3. Pour cela, l'organe de fixation 7 est inséré par sa deuxième partie 72 en premier, dans un mouvement suivant la direction (Oy). Durant l'insertion, la deuxième partie 72 se déforme alors élastiquement pour traverser les différents éléments. L'insertion se termine lors de la mise en butée de l'organe d'insertion 7, ici de sa première extrémité 71 sur le flanc latéral 51, 517 de l'adaptateur 5. Les dimensions de l'organe de fixation 7 et sa configuration par rapport aux différents éléments qu'il traverse sont définies de telle manière que, lorsqu'il est inséré dans la lumière 1000, il l'obture complètement.

Une fois inséré dans la lumière 1000, l'embase 73 occupe l'ouverture 45, et sa complémentarité de forme empêche l'organe de fixation 7 de tourner autour de son axe d'extension longitudinale.

Il est à noter que, une fois le dispositif de connexion 10 selon l'invention assemblé avec la partie terminale 4 du bras d'entraînement 1, les parois supérieures, respectivement 40 et 506, de cette partie terminale 5 et de la tête 56 de l'adaptateur 5, ainsi que les pans latéraux 41 de cette partie terminale 4 et les flancs latéraux 516 de la tête 56 de l'adaptateur forment avantageusement une surface continue, contribuant ainsi à l'esthétique de l'ensemble, et supprimant également toute zone d'accumulation éventuelle de débris, salissures ou particules potentiellement nuisibles au bon fonctionnement de l'ensemble.

L'invention permet ainsi, par des organes simples et faciles à mettre en œuvre, de réaliser une liaison simple et efficace d'un balai d'essuyage 2 sur un bras d'entraînement 1 présentant une partie terminale 4 spécifique du type décrit précédemment. L'invention ne saurait toutefois se limiter aux organes et configurations décrits et illustrés, et elle s'applique également à tous organes ou configurations équivalents et à toute combinaison de tels organes.

En particulier, selon différentes variantes de réalisation, le dispositif de connexion 10 selon l'invention et plus particulièrement l'organe de fixation 7 peut comporter qu'une seule portion d'extrémité en appui sur l'un des flancs latéraux 51, 517 de l'adaptateur 5.

## Revendications

1. Dispositif de connexion (10) destiné à relier un balai d'essuyage (2) à un bras d'entraînement (1) d'un système d'essuyage (100) pour véhicule, comprenant :
- un adaptateur (5) formé au moins par une paroi supérieure (50) à partir de laquelle sont issus au moins deux flancs latéraux (51), dont un premier flanc latéral et un deuxième flanc latéral, de sorte à délimiter un volume interne (54) dans lequel un connecteur (3) solidaire du balai d'essuyage (2) est destiné à s'étendre, le premier flanc latéral et le deuxième flanc latéral comprennent chacun un orifice (55) aligné l'un avec l'autre,
- un organe de fixation (7) comprenant des extrémités (71, 72), l'organe de fixation (7) traversant au moins les deux orifices (55) de l'adaptateur (5),
dans lequel au moins une des extrémités (71, 72), dite première extrémité (71), de l'organe de fixation (7) dépasse du premier flanc latéral (51) de l'adaptateur (5) et dans lequel au moins une portion de cette première extrémité (71, 72) est en appui contre le premier flanc latéral (51) de l'adaptateur (5), **caractérisé en ce qu'**au moins un bord périphérique (78, 79) de la portion de la première extrémité (71) est configuré pour venir en appui contre une partie terminale (4) d'un bras d'entraînement (1).

2. Dispositif de connexion selon la revendication 1, **caractérisé en ce que** la portion de la première extrémité (71) est en appui contre une face externe du premier flanc latéral (51).

3. Dispositif de connexion selon l'une quelconque des revendications précédentes, **caractérisé en ce que** l'organe de fixation (7) comprend une deuxième extrémité (72) opposée à la première extrémité (71) et entre lesquelles un cylindre (70) s'étend.

4. Dispositif de connexion selon la revendication précédente, **caractérisé en ce que** la portion de la première extrémité (71) comprend une première embase (73) délimitant un premier épaulement (75) par rapport au cylindre (70).

5. Dispositif de connexion selon la revendication 3 ou 4, **caractérisé en ce que** le cylindre (70) est configuré pour former un pivot pour le connecteur (3) du balai d'essuyage (2).

6. Dispositif de connexion selon l'une quelconque des revendications 3 à 5, **caractérisé en ce que** la deuxième extrémité (72) de l'organe de fixation (7) dépasse du deuxième flanc latéral (51) de l'adaptateur (5).

7. Dispositif de connexion selon la revendication précédente, **caractérisé en ce que** la deuxième extrémité (72) comprend une portion, dite deuxième portion, en appui contre le deuxième flanc latéral (51) de l'adaptateur (5).

8. Dispositif de connexion selon la revendication précédente, **caractérisé en ce que** la deuxième portion comprend au moins une deuxième embase (74) délimitant au moins un deuxième épaulement (76) par rapport au cylindre (70).

9. Dispositif de connexion selon la revendication précédente, **caractérisé en ce que** la deuxième embase (74) est configurée pour venir en appui contre une partie terminale (4) d'un bras d'entraînement (1).

10. Dispositif de connexion selon la revendication précédente, **caractérisé en ce que** la deuxième embase (74) comprend au moins un méplat (78) configuré pour venir en appui contre la partie terminale (4) du bras d'entraînement (1).

11. Dispositif de connexion selon l'une quelconque des revendications précédentes, **caractérisé en ce que** l'adaptateur (5) comprend un dispositif de blocage configuré pour bloquer des mouvements en translation de l'adaptateur (5) sur le bras d'entraînement (1).

12. Dispositif de connexion selon la revendication précédente, **caractérisé en ce que** le dispositif de blocage est un doigt (53) disposé sur la paroi supérieure (50) de l'adaptateur (5), le doigt (53) étant configuré pour s'insérer dans une fenêtre (42) ménagée sur une partie terminale (4) d'un bras d'entraînement (1).

13. Dispositif de connexion selon l'une quelconque des revendications précédentes, **caractérisé en ce que** l'adaptateur (5) comprend un changement de section (52) ménagé à l'intersection d'une tête (56) et d'un corps (57) de l'adaptateur (5), la tête (56) et le corps (57) s'étendant dans le prolongement l'un de l'autre selon une direction longitudinale (Ox) de l'adaptateur (5).

14. Dispositif de connexion selon la revendication précédente, **caractérisé en ce que** les orifices (55) de l'adaptateur (5) sont situés dans le corps (57) de l'adaptateur (5).

## Patentansprüche

1. Verbindungsvorrichtung (10) zum Verbinden eines Wischerblatts (2) mit einem Antriebsarm (1) eines Wischsystems (100) für ein Fahrzeug, umfassend:
- einen Adapter (5), der zumindest durch eine obere Wand (50) ausgebildet ist, von der zumindest zwei seitliche Flanken (51), eine erste seitliche Flanke und eine zweite seitliche Flanke, ausgehen, um ein Innenvolumen (54) zu begrenzen, in dem sich ein mit dem Wischerblatt (2) fest verbundener Verbinder (3) erstrecken soll, wobei die erste seitliche Flanke und die zweite seitliche Flanke jeweils eine Öffnung (55) umfassen, die zueinander ausgerichtet sind,
- ein Befestigungsorgan (7), das Enden (71, 72) umfasst, wobei das Befestigungsorgan (7) zumindest durch die beiden Öffnungen (55) des Adapters (5) verläuft, wobei zumindest eines der Enden (71, 72), das sogenannte erste Ende (71), des Befestigungsorgans (7) über die erste seitliche Flanke (51) des Adapters (5) hinausragt und wobei zumindest ein Abschnitt dieses ersten Endes (71, 72) an der ersten seitlichen Flanke (51) des Adapters (5) anliegt, **dadurch gekennzeichnet, dass** zumindest eine Umfangskante (78, 79) des Abschnitts des ersten Endes (71) so konfiguriert ist, dass sie an einem Endteil (4) eines Antriebsarms (1) anliegt.

2. Verbindungsvorrichtung nach Anspruch 1, **dadurch gekennzeichnet, dass** der Abschnitt des ersten Endes (71) an einer Außenfläche der ersten seitlichen Flanke (51) anliegt.

3. Verbindungsvorrichtung nach einem der vorangehenden Ansprüche, **dadurch gekennzeichnet, dass** das Befestigungsorgan (7) ein dem ersten Ende (71) gegenüberliegendes zweites Ende (72) umfasst, wobei sich zwischen ihnen ein Zylinder (70) erstreckt.

4. Verbindungsvorrichtung nach dem vorangehenden Anspruch, **dadurch gekennzeichnet, dass** der Abschnitt des ersten Endes (71) eine erste Basis (73) umfasst, die eine erste Schulter (75) in Bezug auf den Zylinder (70) begrenzt.

5. Verbindungsvorrichtung nach Anspruch 3 oder 4, **dadurch gekennzeichnet, dass** der Zylinder (70) so konfiguriert ist, dass er einen Drehpunkt für den Verbinder (3) des Wischerblatts (2) ausbildet.

6. Verbindungsvorrichtung nach einem der Ansprüche 3 bis 5, **dadurch gekennzeichnet, dass** das zweite Ende (72) des Befestigungsorgans (7) über die zweite seitliche Flanke (51) des Adapters (5) hinausragt.

7. Verbindungsvorrichtung nach dem vorangehenden Anspruch, **dadurch gekennzeichnet, dass** das zweite Ende (72) einen Abschnitt, den sogenannten zweiten Abschnitt, umfasst, der an der zweiten seitlichen Flanke (51) des Adapters (5) anliegt.

8. Verbindungsvorrichtung nach dem vorangehenden Anspruch, **dadurch gekennzeichnet, dass** der zweite Abschnitt zumindest eine zweite Basis (74) umfasst, die zumindest eine zweite Schulter (76) in Bezug auf den Zylinder (70) begrenzt.

9. Verbindungsvorrichtung nach dem vorangehenden Anspruch, **dadurch gekennzeichnet, dass** die zweite Basis (74) so konfiguriert ist, dass sie an einem Endteil (4) eines Antriebsarms (1) anliegt.

10. Verbindungsvorrichtung nach dem vorangehenden Anspruch, **dadurch gekennzeichnet, dass** die zweite Basis (74) zumindest eine Abflachung (78) umfasst, die so konfiguriert ist, dass sie an einem Endteil (4) des Antriebsarms (1) anliegt.

11. Verbindungsvorrichtung nach einem der vorangehenden Ansprüche, **dadurch gekennzeichnet, dass** der Adapter (5) eine Blockiervorrichtung umfasst, die so konfiguriert ist, dass sie translatorische Bewegungen des Adapters (5) am Antriebsarm (1) blockiert.

12. Verbindungsvorrichtung nach dem vorangehenden Anspruch, **dadurch gekennzeichnet, dass** die Blockiervorrichtung ein an der oberen Wand (50) des Adapters (5) angeordneter Finger (53) ist, wobei der Finger (53) so konfiguriert ist, dass er in ein an einem Endteil (4) eines Antriebsarms (1) vorgesehenes Fenster (42) passt.

13. Verbindungsvorrichtung nach einem der vorangehenden Ansprüche, **dadurch gekennzeichnet, dass** der Adapter (5) eine Querschnittsänderung (52) umfasst, die an der Schnittstelle eines Kopfs (56) und eines Körpers (57) des Adapters (5) vorgesehen ist, wobei sich der Kopf (56) und der Körper (57) in gegenseitiger Verlängerung in einer Längsrichtung (Ox) des Adapters (5) erstrecken.

14. Verbindungsvorrichtung nach dem vorangehenden Anspruch, **dadurch gekennzeichnet, dass** sich die Öffnungen (55) des Adapters (5) im Körper (57) des Adapters (5) befinden.

## Claims

1. Connection device (10) intended to connect a wiper blade (2) to a drive arm (1) of a wiper system (100) for vehicles, comprising:
- an adapter (5) formed at least by an upper wall (50) from which extend at least two lateral flanks (51), including a first lateral flank and a second lateral flank, so as to delimit an internal volume (54) in which a connector (3) fastened to the wiper blade (2) is intended to lie, the first lateral flank and the second lateral flank each comprising an orifice (55) each aligned with the other,
- a fixing member (7) comprising ends (71, 72), the fixing member (7) passing through at least the two orifices (55) of the adapter (5),
wherein at least one of the ends (71, 72) of the fixing member (7), termed the first end (71), extends beyond the first lateral flank (51) of the adapter (5) and wherein at least a portion of that first end (71, 72) bears against the first lateral flank (51) of the adapter (5), **characterized in that** at least one peripheral edge (78, 79) of the portion of the first end (71) is configured to come to bear against a terminal part (4) of a drive arm (1).

2. Connection device according to Claim 1, **characterized in that** the portion of the first end (71) bears against an external face of the first lateral flank (51).

3. Connection device according to either one of the preceding claims, **characterized in that** the fixing member (7) comprises a second end (72) opposite the first end (71) between which ends a cylinder (70) extends.

4. Connection device according to the preceding claim, **characterized in that** the portion of the first end (71) comprises a first base (73) delimiting a first shoulder (75) relative to the cylinder (70).

5. Connection device according to Claim 3 or 4, **characterized in that** the cylinder (70) is configured to form a pivot for the connector (3) of the wiper blade (2) .

6. Connection device according to any one of Claims 3 to 5, **characterized in that** the second end (72) of the fixing member (7) extends beyond the second lateral flank (51) of the adapter (5).

7. Connection device according to the preceding claim, **characterized in that** the second end (72) comprises a portion, termed the second portion, bearing against the second lateral flank (51) of the adapter (5).

8. Connection device according to the preceding claim, **characterized in that** the second portion comprises at least one second base (74) delimiting at least one second shoulder (76) relative to the cylinder (70).

9. Connection device according to the preceding claim, **characterized in that** the second base (74) is configured to come to bear against a terminal part (4) of a drive arm (1).

10. Connection device according to the preceding claim, **characterized in that** the second base (74) comprises at least one flat (78) configured to come to bear against the terminal part (4) of the drive arm (1).

11. Connection device according to any one of the preceding claims, **characterized in that** the adapter (5) comprises a blocking device configured to block movements in translation of the adapter (5) on the drive arm (1).

12. Connection device according to the preceding claim, **characterized in that** the blocking device is a finger (53) disposed on the upper wall (50) of the adapter (5), the finger (53) being configured to be inserted in a window (42) arranged on a terminal part (4) of a drive arm (1).

13. Connection device according to any one of the preceding claims, **characterized in that** the adapter (5) comprises a change of section (52) arranged at the intersection of a head (56) and a body (57) of the adapter (5), the head (56) and the body (57) extending in line with each other in a longitudinal direction (Ox) of the adapter (5).

14. Connection device according to the preceding claim, **characterized in that** the orifices (55) of the adapter (5) are situated in the body (57) of the adapter (5).
